# EUROPÄISCHE PATENTSCHRIFT

(11) **EP 3 630 568 B1**
(45) Veröffentlichungstag und Bekanntmachung des Hinweises auf die Patenterteilung: **07.07.2021**
(21) Anmeldenummer: 18730269.0
(22) Anmeldetag: 28.05.2018
(51) Int. Cl.: B60T 15/04, F16K 11/02, F16K 11/07

(54) **WEGEVENTIL FÜR PNEUMATISCHE SCHALTUNG**
WAY VALVE FOR PNEUMATIC CIRCUIT
VALVE À VOIES MULTIPLES POUR PNEUMATIQUE CIRCUIT

(30) Priorität: 01.06.2017 DE 102017112104
(43) Veröffentlichungstag der Anmeldung: 08.04.2020
(73) Patentinhaber: KNORR-BREMSE Systeme für Nutzfahrzeuge GmbH, 80809 München (DE)
(72) Erfinder: KONCZ, Laszlo, 6000 Kecskemét (HU)
(86) Internationale Anmeldenummer: PCT/EP2018/063962
(87) Internationale Veröffentlichungsnummer: WO 2018/219879

(56) Entgegenhaltungen:
- EP-A2- 1 188 634
- FR-A3- 2 060 105
- US-A- 3 563 508
- US-A- 4 088 374

## Beschreibung

Die vorliegende Erfindung betrifft ein Wegeventil für eine pneumatische Schaltung, Insbesondere für eine pneumatische Vorrichtung zum Steuern einer Bremsanlage und/oder eines Aktuators zum Bewegen eines Aufbaus eines Anhängerfahrzeugs einer Zugfahrzeug-Anhängerkombination. Ferner betrifft die vorliegende Erfindung ein Verfahren zum Einstellen eines Betriebsdrucks einer pneumatischen Anlage mittels des vorgestellten Wegeventils.

Aus dem Stand der Technik sind Wegeventile zum Steuern von pneumatischen Schaltungen bekannt.

So offenbart beispielsweise die US 2008/0001114 A1 ein Bedienungselement für ein Gerät zum Steuern eines Luftmassenstroms.

Aus der Druckschrift WO 2011 015 831 A1 ist ein Park- und Bremsventil für einen Anhänger eines Lastkraftwagens mit einem manuell einstellbaren Rangierventil bekannt.

Die DE 10 2007 038 472 A1 offenbart eine Ventilanordnung zur Steuerung einer wenigstens einen Federspeicherbremszylinder sowie wenigstens einen Betriebsbremszylinder beinhaltenden Bremsanlage eines Anhängerfahrzeugs einer Zugfahrzeug-Anhängerkombination.

Eine Ventilanordnung zur Belüftung von Federspeicher-Bremszylindern In einem Anhängefahrzeug mit pneumatischer Bremsanlage, mit einem ersten Anschluss für eine mit einem Vorratsbehälter des Anhängefahrzeugs verbundene Leitung und einem zweiten Anschluss für eine zu den Federspeicher-Bremszylindern führende Leitung, bei der in Abhängigkeit vom Druck an einem ersten Steuereingang der erste Anschluss mit dem zweiten Anschluss verbindbar ist, ist in der WO 2016 198 153 A1 offenbart.

Die EP 2 190 706 B1 offenbart eine Ventilanordnung zur Steuerung einer wenigstens einen Federspeicherbremszylinder sowie wenigstens einen Betriebsbremszylinder beinhaltenden Bremsanlage eines Anhängerfahrzeugs einer Zugfahrzeug-Anhängerkombination.

In der EP 2 567 874 A2 wird eine Ventilbaugruppe für eine Anhängerbremsanlage eines Nutzfahrzeugs offenbart, die über einen Versorgungsanschluss, einen Federspeicheranschluss und ein manuelles Betätigungsorgan verfügt.

Aus der US 2005/0137773 A1 ist ein Druckkontrollsystem zum Versorgen eines Aktuators mit Druckluft bekannt.

Keine der voranstehend genannten Druckschriften offenbart ein Wegeventil mit an einem Schieber angeordneten Dichtungselementen, die durch in Durchlassbereichen vorgesehene Durchlasselemente gestaucht bzw. komprimiert werden, wenn sich der Schieber bewegt.

Aus der US 4 088 374 A ist ferner eine Anordnung für eine Druckluftbremse einer Zugmaschine bekannt.

Wegeventile für pneumatische Schaltungen, insbesondere für pneumatische Schaltungen zum Einsatz bei Nutzfahrzeugen, sind aufgrund hoher Betriebsdrücke und entsprechend hoher Belastungen fehleranfällig. Entsprechend kann es vorkommen, dass Komponenten eines Wegeventils, wie bspw. Dichtungsringe, aufgrund der hohen Belastung durch Druckluft sehr schnell verschleißen und ersetzt werden müssen.

Es ist daher die Aufgabe der vorliegenden Erfindung, ein Wegeventil der eingangs genannten Art in vorteilhafter Weise weiterzubilden, insbesondere dahingehend, dass ein besonders materialschonender und wartungsarmer Betrieb des Wegeventils erreicht wird.

Diese Aufgabe wird erfindungsgemäß gelöst durch ein Wegeventil mit den Merkmalen des Anspruchs 1. Danach ist vorgesehen, dass das Wegeventil eine Druckkammer und einen Schieber aufweist, wobei die Druckkammer einen Druckraum, einen ersten Anschluss und wenigstens einen zweiten Anschluss aufweist.

Weiterhin ist vorgesehen, dass der Schieber in dem Druckraum zwischen einer ersten Position und wenigstens einer zweiten Position beweglich angeordnet ist, wobei der Schieber ein erstes und wenigstens ein zweites flexibles Dichtungselement umfasst, und das erste Dichtungselement in einem Bereich des Schiebers angeordnet ist, der sich in einem ersten in dem Druckraum vorgesehenen Durchlassbereich befindet, wenn sich der Schieber in der ersten Position befindet. Ferner ist vorgesehen, dass das wenigstens eine zweite Dichtungselement in einem Bereich des Schiebers angeordnet ist, der sich in wenigstens einem zweiten in dem Druckraum vorgesehenen Durchlassbereich befindet, wenn sich der Schieber in der wenigstens einen zweiten Position befindet. Weiterhin ist vorgesehen, dass der erste Durchlassbereich und der wenigstens eine zweite Durchlassbereich jeweils eine Vielzahl voneinander beabstandeter Durchlasselemente aufweisen.

Ausgestaltungen der vorgestellten Erfindung ergeben sich aus der Beschreibung und den abhängigen Ansprüchen.

Die vorgestellte Erfindung basiert auf dem Grundgedanken, dass ein Wegeventil zur Steuerung einer pneumatischen Schaltung verwendet wird, das besonders wartungsarm ist. Dies wird dadurch erreicht, dass das vorgestellte Wegeventil einen Schieber aufweist, mittels dessen in einer Druckkammer des Wegeventils vorgesehene Strömungskanäle und/oder Anschlüsse zu öffnen bzw. zu schließen sind. Entsprechend wird durch eine Bewegung des Schiebers zwischen verschiedenen Positionen das Wegeventil umgeschaltet, wodurch je nach aktueller Position des Schiebers verschiedene Anschlüsse des Wegeventils mit Druckluft versorgt werden. Dies bedeutet, dass durch eine Bewegung des Schiebers in das Wegeventil strömende Druckluft zu verschiedenen Anschlüssen des Wegeventils geleitet werden kann.

Insbesondere ist vorgesehen, dass mittels einer Bewegung des Schiebers durch bspw. einen Versorgungsanschluss in das Wegeventil strömende Druckluft zu einer Zweigleitung, an die bspw. eine pneumatische Anlage angeschlossen sein kann, oder zu einem Entlüftungsanschluss, an dem ein Entlüftungsventil angeschlossen sein kann, geleitet werden kann.

Das vorgestellte Wegeventil kann bspw. als Steuerungseinheit einer wenigstens einen Federspeicherbremszylinder sowie wenigstens einen Betriebsbremszylinder beinhaltenden Bremsanlage eines Anhängerfahrzeugs einer Zugfahrzeug-Anhängerkombination sein.

Es ist vorgesehen, dass das vorgestellte Wegeventil zum Steuern eines Druckluftstroms verwendet wird, der das Wegeventil über einen ersten Anschluss bzw. eine Zuleitung versorgt, und der das Wegeventil über mindestens einen zweiten Anschluss bzw. eine Zweigleitung und/oder eine Entlüftungsleitung verlässt.

Das vorgestellte Wegeventil kann ein Schieberventil sein, das nach einem SchieberVentil-Prinzip arbeitet.

Das vorgestellte Wegeventil kann bspw. als Park- und Rangierventil mit Integrierter Hebe-\ Senkfunktion ausgestaltet sein.

Es ist vorgesehen, dass an dem Schieber des vorgestellten Wegeventils eine Anzahl flexibler Dichtungselemente angeordnet sind, die dazu konfiguriert sind, einen in der Druckkammer des Wegeventils gebildeten Druckraum, je nach aktueller Position des Schiebers, dicht, d. h. insbesondere dicht gegenüber einem Austritt von Luft bzw. Druckluft, abzuschirmen. Dabei ist weiterhin vorgesehen, dass ein jeweiliges Dichtungselement durch eine Bewegung des Schiebers in einen durch die Druckkammer gebildeten Durchlassbereich bewegt wird, um einen hinter dem Dichtungselement gelegenen Anschluss mit Druckluft zu versorgen bzw. ein Strömen von Luft durch den Durchlassbereich zu ermöglichen.

Durch eine Bewegung des Schiebers des vorgestellten Wegeventils können jeweilige an dem Schieber angeordnete Dichtungselemente in jeweilige Durchlassbereiche bewegt werden, wodurch, je nach Position des Schiebers, in dem Wegeventil verschiedene Strömungswege geöffnet oder geschlossen werden.

Die in dem Druckraum des vorgestellten Wegeventils vorgesehenen Durchlassbereiche können insbesondere im Bereich vor oder hinter einem jeweiligen Anschluss vorgesehen sein und eine Strömung von Luft durch den jeweiligen Anschluss regeln.

Es kann vorgesehen sein, dass der Schieber eine Bohrung aufweist, durch die Luft durch den Schieber strömen kann. Die Bohrung kann sich insbesondere durch einen Teil des Schiebers erstrecken und bspw. einen Zweiganschluss, an dem eine pneumatische Anlage angeschlossen ist, mit einem Entlüftungsanschluss verbinden.

Insbesondere kann an einem Ende der Bohrung ein Dichtungselement vorgesehen sein, das einen Strömungsweg durch die Bohrung abdichtet, wenn sich das Dichtungselement außerhalb eines Durchlassbereichs befindet. Weiterhin kann das Dichtungselement den Strömungsweg durch die in dem Schieber vorgesehene Bohrung freigeben, wenn das Dichtungselement in einen Durchlassbereich bewegt und, dadurch bedingt, komprimiert wird.

Ein Dichtungselement des vorgestellten Wegeventils kann bspw. ein O-Ring aus einem flexiblen Material, wie bspw. Gummi, Kunststoff oder einer Kombination aus den voranstehend genannten Materialien sein.

Durch eine Bewegung eines Dichtungselements in einen dem Dichtungselement zugeordneten Durchlassbereich wird das Dichtungselement gestaucht, d. h. in seinem Querschnitt verkleinert, wodurch ein Abstand zwischen dem Dichtungselement und einer Wand einer den Durchlassbereich bildenden Druckkammer erzeugt wird, durch den Druckluft strömen und einen hinter dem Dichtungselement angeordneten Anschluss mit Druckluft versorgen bzw. Luft an dem Dichtungselement vorbei strömen kann. Dabei kann insbesondere vorgesehen sein, dass das Dichtungselement selektiv im Bereich jeweiliger Durchlasselemente mit Druckluft beaufschlagt wird, um das Dichtungselement zu verformen und ein besonders materialschonendes Aufgleiten des Dichtungselements auf die Durchlasselemente zu ermöglichen.

Zum selektiven Beaufschlagen jeweiliger Dichtungselemente mit Druckluft kann ein durch das Wegeventil geleiteter bzw. zu leitender Druckluftstrom durch oval geformte

Öffnungen von Verbindungen zwischen jeweiligen Anschlüssen und einem Druckraum des Wegeventils auf die jeweiligen Dichtungselemente geleitet werden.

Durch die oval geformten Öffnungen wird ein einem jeweiligen Anschluss zugeordnetes Dichtungselement bereichsweise mit Druckluft beaufschlagt, wodurch das Dichtungselement progressiv deformiert und allmählich komprimiert wird.

Es kann insbesondere vorgesehen sein, dass ein jeweiliger zweiter Anschluss des vorgestellten Wegeventils, wie bspw. ein Anschluss für ein Entlüftungsventil und/oder ein erster Anschluss des Wegeventils eine ovale Öffnung bzw. einen ovalen Querschnitt aufweist bzw. aufweisen.

Es ist ferner denkbar, dass ein bspw. einem ersten Anschluss zugeordnetes erstes Dichtungselement mittels ovaler Öffnungen und ein bspw. einem weiteren Anschluss zugeordnetes weiteres Dichtungselement mittels in einem weiteren Durchlassbereich angeordneter Durchlasselemente komprimiert wird bzw. zu komprimieren ist. Dabei ist insbesondere vorgesehen, dass die Durchlasselemente abgerundete bzw. abgeflachte bzw. konische Enden aufweisen, um eine besonders materialschonende Bewegung des weiteren Dichtungselements auf die in dem weiteren Durchlassbereich angeordneten Durchlasselemente zu ermöglichen.

Selbstverständlich kann auch eine Kombination von ovalen Öffnungen an einem jeweiligen Anschluss und Durchlasselementen mit abgerundeten bzw. abgeflachten bzw. konischen Enden vorgesehen sein, so dass ein auf die Durchlasselemente zu bewegendes Dichtungselement mittels eines durch die ovalen Öffnungen geleiteten bzw. zu leitenden Druckluftstroms zumindest bereichsweise zu komprimieren ist und mit besonders wenig Reibungswiderstand auf die Durchlasselemente gleitet.

Das vorgestellte Wegeventil kann aufgrund der vorgesehenen Anordnung der Dichtungselemente und Durchlassbereiche mit lediglich einem beweglichen Teil in Form des Schiebers besonders schmal gefertigt werden, da auf eine Vielzahl dauerhaft vorzusehender Strömungswege, wie sie im Stand der Technik üblich sind, verzichtet werden kann.

Der Schieber des vorgestellten Wegeventils kann bspw. als Kolben mit einer Bohrung und einem Griff- bzw. Kopfteil ausgestaltet sein.

Zum Stauchen, d. h. zum Komprimieren, eines jeweiligen Dichtungselements des vorgestellten Wegeventils sind in jeweiligen Durchlassbereichen Durchlasselemente vorgesehen, die einen Querschnitt des Druckraums im Bereich eines Durchlassbereichs gegenüber einem Bereich, in dem sich ein entsprechendes Dichtungselement bewegt, wenn dieses nicht gestaucht ist, reduzieren. Dazu Ist insbesondere vorgesehen, dass ein Durchlassbereich eine Vielzahl Durchlasselemente aufweist, die voneinander beanstandet sind, so dass jeweilige beabstandete Bereiche als Strömungskanäle wirken, durch die Druckluft strömt, wenn ein entsprechendes Dichtungselement in einen jeweiligen Durchlassbereich bewegt wurde.

Die in dem vorgestellten Wegeventil vorgesehenen Dichtungselemente, d. h. insbesondere das erste Dichtungselement und das mindestens eine zweite Dichtungselement, können aus Gummi, Kunststoff oder jedem weiteren flexiblen Material bzw. einer Kombination aus diesen Materialien bestehen.

Des Weiteren kann vorgesehen sein, dass jeweilige Durchlasselemente der Vielzahl voneinander beabstandeter Durchlasselemente als voneinander beabstandete Rippen ausgestaltet sind, die ein Volumen des Druckraums der Druckkammer im Bereich der Rippen reduzieren.

Durch Durchlasselemente, die als voneinander beabstandete Rippen ausgestaltet sind, kann ein Dichtungselement gleichmäßig mit einem mechanischen Druck beaufschlagt werden, so dass das Dichtungselement zumindest bereichsweise, vorzugsweise in seinem gesamten Umfang, durch den mechanischen Druck gestaucht bzw. komprimiert wird. Zur gleichmäßigen Beaufschlagung eines Dichtungselements mit mechanischem Druck können entlang eines Umfangs eines Durchlassbereichs in regelmäßigen Abständen oder an vorgegebenen Positionen, wie bspw. in jeweils 90° Ausrichtung zueinander, verschiedene Durchlasselemente bzw. Rippen vorgesehen sein.

Darüber hinaus kann vorgesehen sein, dass die Durchlasselemente wenigstens an ihren in Bewegungsrichtung eines Schiebers des vorgestellten Wegeventils vorgesehenen Enden abgeflacht, insbesondere konisch abgeflacht bzw. abgerundet, geformt sind, um ein materialschonendes bzw. harmonisches Auf- bzw. Abgleiten eines jeweiligen flexiblen Dichtungselements auf die Durchlasselemente bzw. von den Durchlasselementen herunter zu ermöglichen. Durch eine abgeflachte d. h. eine abflachend in eine ein jeweiliges Durchlasselement bildende Struktur übergehende Form kann ein besonders harmonisches Aufgleiten eines Dichtungselements auf das Durchlasselement erreicht werden. Entsprechend wird das Dichtungselement durch ein abgeflacht bzw. abgerundet geformtes Durchlasselement auch bei großem mechanischem Druck auf das Dichtungselement nicht beschädigt, wenn sich das Dichtungselement auf das Durchlasselement bzw. von dem Durchlasselement herunter bewegt.

Es kann vorgesehen sein, dass jeweilige Durchlasselemente einen Querschnitt aufweisen, der einem Querschnitt eines jeweiligen auf die Durchlasselemente zu bewegenden flexiblen Dichtungselements entspricht. Durch eine auf eine Materialstärke eines Dichtungselements abgestimmte Ausgestaltung der Durchlasselemente und/oder jeweiliger Abstände zwischen verschiedenen Durchlasselementen kann eine auf ein Dichtungselement abgestimmte Kraft zum Stauchen des Dichtungselements bereitgestellt und ein entsprechend effizienter Durchlass für Druckluft in einem Durchlassbereich erreicht werden.

Darüber hinaus kann alternativ oder zusätzlich vorgesehen sein, dass das Wegeventil ein 3/2 Wegeventil mit einem ersten und einem zweiten Durchlassbereich, einem Versorgungsanschluss, einem Zweiganschluss und einem Entlüftungsanschluss ist. Dabei kann vorgesehen sein, dass der Schieber eine Bohrung aufweist, die den Entlüftungsanschluss mit dem Zweiganschluss verbindet, wenn der Schieber in die erste Position gebracht ist. Dabei kann weiterhin vorgesehen sein, dass der Schieber in einem Bereich zwischen dem ersten und dem wenigstens einen zweiten flexiblen Dichtungselement beabstandet von einer Wand der Druckkammer ist und zusammen mit der Wand der Druckkammer einen Strömungskanal bildet, der den Versorgungsanschluss mit dem Zweiganschluss verbindet, wenn der Schieber in die wenigstens eine zweite Position gebracht ist.

Das vorgestellte Wegeventil eignet sich insbesondere als 3/2 Wegeventil für ein Park- und Rangier- bzw. Mischventil eines Fahrzeugs, wie bspw. einem Nutzfahrzeug, insbesondere einem Nutzfahrzeug, wie bspw. einem Lastkraftwagen bzw. einem Anhänger eines Nutzfahrzeugs. Dazu ist insbesondere vorgesehen, dass der Schieber des vorgestellten Wegeventils eine Bohrung aufweist, die einen Entlüftungsanschluss des Wegeventils mit einem Zweiganschluss bzw. einem zum Verbinden mit einer pneumatischen Anlage des Fahrzeugs vorgesehenen Anschluss, verbindet. Durch die Bohrung kann Luft durch den Schieber von dem Zweiganschluss zu dem Entlüftungsanschluss geleitet werden, wenn der Schieber in eine entsprechende Position gebracht ist und bspw. nicht von einem Dichtungselement abgeschirmt wird.

Durch eine Verwendung von zwei verschiedenen Durchlassbereichen können zwei Schaltzustände erreicht werden, die eine Kombination von drei verschiedenen Anschlüssen regeln. Entsprechend kann ein Zweiganschluss in einem ersten Schaltzustand bzw. einer ersten Position des Schiebers des vorgestellten Wegeventils mit einem Entlüftungsventil verbunden werden, um eine an dem Zweiganschluss angeschlossene pneumatische Anlage zu entlüften. Ferner kann der Zweiganschluss durch eine Bewegung des Schiebers in eine zweite Position mit einem Versorgungsanschluss verbunden werden, um die mit dem Zweiganschluss verbundene pneumatische Anlage mit Druckluft aus bspw. einem Speicher zu versorgen und bspw. einen Aufbau eines Anhängers eines Fahrzeugs anzuheben oder eine Parkbremse zu lösen.

Des Weiteren kann vorgesehen sein, dass die Bohrung von einem sich in dem Druckraum bewegenden unteren Ende des Schiebers bis zu einem in dem Schieber gebildeten Auslassbereich verläuft. Dabei kann vorgesehen sein, dass der Auslassbereich in Richtung des Entlüftungsanschlusses von dem ersten flexiblen Dichtungselement und in Richtung des Zweiganschlusses von einem dritten flexiblen Dichtungselement umgeben ist. Dazu kann vorgesehen sein, dass sich das erste flexible Dichtungselement in dem ersten Durchlassbereich befindet und, dadurch bedingt, eine Verbindung zwischen dem Versorgungsanschluss und dem Entlüftungsanschluss bereitstellt, wenn sich der Schieber in der ersten Position befindet. Dazu kann weiterhin vorgesehen sein, dass sich das erste flexible Dichtungselement außerhalb des ersten Durchlassbereichs befindet und, dadurch bedingt, den Versorgungsanschluss von dem Entlüftungsanschluss trennt, wenn sich der Schieber in der zweiten Position befindet.

Durch einen in dem Schieber des vorgestellten Wegeventils vorgesehenen Auslassbereich kann ein Reservoir für Druckluft zum Versorgen eines durch den Auslassbereich mit Druckluft versorgten Anschlusses bereitgestellt werden, so dass in dem Auslassbereich ein Druckausgleich zwischen einem in den Auslassbereich strömenden Volumenstrom und einem aus dem Anschluss strömenden Volumenstrom stattfinden kann. Insbesondere unter Verwendung der in dem vorgestellten Wegeventil vorgesehenen ovalen Öffnungen kann es vorkommen, dass ein hinter einer jeweiligen Öffnung strömender Volumenstrom mit weniger Druck strömt als ein die Öffnung anströmender Volumenstrom. Ein Auslassbereich eignet sich dazu, einen Druck auf eine die Öffnung formende Struktur sowie ggf. auf weitere Strukturen, wie bspw. Dichtungselemente, insbesondere bei Belastungsspitzen zu minimieren.

Es kann weiterhin vorgesehen sein, dass wenigstens ein an dem vorgestellten Wegeventil vorgesehener Versorgungsanschluss und ein Entlüftungsanschluss als zweite Anschlüsse ausgestaltet sind und jeweils wenigstens eine Öffnung mit einem ovalen Querschnitt aufweisen.

Es Ist denkbar, dass der in dem Schieber des vorgestellten Wegeventils gebildete Auslassbereich mit einer Entlüftungskammer verbunden ist, wenn sich der Schieber in der ersten Position befindet, wobei die Entlüftungskammer an einem dem Auslassbereich entgegengesetzten Ende mittels wenigstens einem vierten flexiblen Dichtungselement abgedichtet ist. Dabei kann die Entlüftungskammer mit dem Auslassbereich direkt verbunden sein oder mittels eines Verbindungselements, wie bspw. einem Ventil bspw. in Abhängigkeit eines in dem Auslassbereich anliegenden Drucks verbunden werden.

Ferner Ist denkbar, dass die wenigstens eine Öffnung des wenigstens einen zweiten Anschlusses des vorgestellten Wegeventils einen elliptischen Querschnitt aufweist. Durch einen elliptischen Querschnitt, der insbesondere mandel- bzw. augenförmlg bzw. linsenförmig bzw. ösenförmig sein kann und bspw. eine Exzentrizität von "ε" kleiner 0,8 aufweist, kann eine besonders progressive bzw. materialschonende Komprimierung eines Dichtungselements erreicht werden.

Durch eine Anzahl oval geformter Öffnungen eines jeweiligen Anschlusses wird ein einem jeweiligen Anschluss zugeordnetes Dichtungselement bereichsweise mit Druckluft beaufschlagt, wodurch sich das Dichtungselement progressiv deformiert und allmählich komprimiert wird.

Es ist insbesondere vorgesehen, dass wenigstens eine oval geformte Öffnung in einem Bereich angeordnet ist bzw. angeordnet wird, in dem das Dichtungselement auf ein Durchlasselement geschoben wird, so dass das Dichtungselement aufgrund eines durch die wenigstens eine oval geformte Öffnung strömenden Druckluftstroms im Bereich des Durchlasselements verformt bzw. komprimiert wird und besonders materialschonend auf das Durchlasselement gleitet. Dabei kann ein Verlauf eines Drucks, mit dem Luft bei einer Bewegung des Schiebers aus einer jeweiligen elliptisch geformten Öffnung strömt, bspw. durch eine Wahl eines besonders kleinen oder eines besonders großen Exzentritätskoeffizienten einer die Öffnung bildenden bzw. durch die Öffnung gebildeten Ellipse beeinflusst werden.

Des Weiteren kann vorgesehen sein, dass der wenigstens eine zweite Anschluss eine Vielzahl ovaler Öffnungen aufweist.

Durch eine Vielzahl ovaler Öffnungen, d. h. bspw. Öffnungen mit einem ovalen Querschnitt, kann eine besonders gleichmäßige Deformation eines jeweiligen Dichtungselements erreicht werden, so dass das Dichtungselement besonders materialschonend komprimiert wird. Dabei können jeweilige ovale Öffnungen der Vielzahl ovaler Öffnungen entlang eines Verlaufs des Dichtungselements angeordnet sein, um das Dichtungselement gleichmäßig bzw. mehrfach in verschiedenen Bereichen des Dichtungselements mit Druck zu beaufschlagen und, dadurch bedingt, progressiv zu verformen.

Weiterhin kann vorgesehen sein, dass jeweilige Öffnungen der Vielzahl Öffnungen aufsteigend oder absteigend eine größere bzw. zunehmende Querschnittsfläche aufweisen. Durch Öffnungen zur Versorgung jeweiliger Anschlüsse des vorgestellten Wegeventils mit Druckluft, die verschiedene Querschnittsflächen aufweisen, können Eigenschaften eines Volumenstroms, mit dem die Druckluft in die Anschlüsse strömt, vorgegeben bzw. beeinflusst werden. Dabei kann eine Querschnittsfläche bzw. eine Form einer jeweiligen ovalen Öffnung in Abhängigkeit einer Aufstandsfläche eines entsprechenden Durchlasselements gewählt werden, so dass ein jeweiliges Dichtungselement selektiv in einem Bereich komprimiert wird, der auf ein jeweiliges Durchlasselement bewegt wird.

Es kann weiterhin vorgesehen sein, dass von dem wenigstens einen zweiten Anschluss in das vorgestellte Wegeventil einströmende Druckluft genutzt wird, um den Schieber von der zweiten Position in die erste Position zu bewegen, so dass die von dem wenigstens einen zweiten Anschluss in das vorgestellte Wegeventil einströmende Druckluft als Feder wirkt bzw. eine Federkraft aufbaut, wenn der Schieber von der zweiten Position in die erste Position bewegt wird.

Weiterhin ist vorgesehen, dass das Wegeventil wenigstens eine Arretiervorrichtung zum Lösen einer Verbindung des Schiebers zu der Druckkammer umfasst.

Durch eine Arretiervorrichtung zum Lösen einer Verbindung des Schiebers zu der Druckkammer kann der Schieber in der zweiten Position, in der eine mit dem vorgestellten Wegeventil verbundene pneumatische Anlage mit Druckluft versorgt wird, arretiert werden.

Aufgrund der Anordnung der Dichtungselemente an dem Schieber des vorgestellten Wegeventils kann das vorgestellte Wegeventil insbesondere ohne mechanische Rückstellfeder ausgestaltet sein, da von einer mit dem Wegeventil verbundenen pneumatischen Anlage zu dem Wegeventil strömende Druckluft bzw. ein durch die Druckluft auf den Schieber ausgeübter Druck dazu verwendet werden kann, den Schieber von der zweiten Position, in der die pneumatische Anlage mit Druckluft versorgt wird, in die erste Position, in der die pneumatische Anlage entlüftet wird, zu bewegen.

Es ist denkbar, dass das vorgestellte Wegeventil eine Arretiervorrichtung in Form einer mechanischen Verrastung umfasst, die bspw. über einen Hebel oder einen Zug zu lösen bzw. zu spannen ist. Die Arretiervorrichtung in Form einer mechanischen Verrastung kann an dem Schieber vorgesehen sein und bspw. in die Druckkammer eingreifen bzw. an der Druckkammer angreifen, um eine Bewegung des Schiebers zu verhindern. Selbstverständlich kann die Arretiervorrichtung in Form einer mechanischen Verrastung auch an der Druckkammer oder jedem weiteren Teil des vorgestellten Wegeventils angeordnet sein und in den Schieber eingreifen bzw. an dem Schieber angreifen, um eine Bewegung des Schiebers zu verhindern.

Ferner ist denkbar, dass das vorgestellte Wegeventil eine Arretiervorrichtung in Form einer Spannvorrichtung umfasst, die ein an dem Schieber vorgesehenes Dichtungselement, insbesondere wenigstens ein im Kopfbereich des Schiebers angeordnetes Dichtungselement spannt bzw. komprimiert, um eine Haftreibung zwischen dem Schieber und der Druckkammer zu reduzieren und eine Bewegung des Schiebers in der Druckkammer zu ermöglichen, und die das wenigstens eine Dichtungselement entspannt, um eine Bewegung des Schiebers in der Druckkammer zu verhindern.

Das vorgestellte Wegeventil kann in einem Spritzgussprozess hergestellt werden. Dabei kann das Wegeventil insbesondere in einem Bereich, in dem jeweilige Teile des Wegeventils in Kontakt mit einem Dichtungselement kommen, bspw. durch zusätzliche Materialien, die bspw. besonders glatte Oberflächen aufweisen, verstärkt bzw. optimiert sein, so dass sich das Dichtungselement besonders materialschonend an bspw. einer Druckkammer des Wegeventils entlang bewegen kann.

Weiterhin kann das vorgestellte Wegeventil aus einem Metall, wie bspw. Aluminium gefertigt werden, wobei jeweilige Öffnungen jeweiliger Anschlüsse bspw. mittels eines Funkenerodierungsverfahrens bzw. "EDM"-Verfahrens in das Metall eingebracht werden, um an jeweiligen äußeren Bereichen einer jeweiligen ovalen Öffnung einen besonders kleinen Radius bzw. eine besonders flache Form mit scharfen Kanten zu ermöglichen.

Selbstverständlich kann das vorgestellte Wegeventil auch aus einer Materialkombination, wie bspw. einem aus einem Kunststoff gebildeten Schieber und einer aus einem Metall gebildeten Druckkammer gebildet sein. Der Schieber kann bspw. zylindrische Aufnahmen für jeweiligen Dichtungselemente aufweisen.

Ferner betrifft die vorgestellte Erfindung ein Verfahren zum Einstellen eines Betriebsdrucks einer pneumatischen Anlage, bei dem der Betriebsdruck der pneumatischen Anlage mittels eines Wegeventils eingestellt wird, das eine Druckkammer und einen Schieber umfasst. Dabei ist vorgesehen, dass die Druckkammer einen Druckraum, einen ersten Anschluss und wenigstens einen zweiten Anschluss aufweist. Dabei ist weiterhin vorgesehen, dass der Schieber in dem Druckraum der Druckkammer zwischen einer ersten Position, bei der die pneumatische Anlage mit einem Entlüftungsventil verbunden wird, und einer zweiten Position, bei der die pneumatische Anlage mit einer Versorgungsleitung zum Versorgen der pneumatischen Anlage mit Druckluft verbunden wird, bewegt wird. Weiterhin ist vorgesehen, dass der Schieber ein erstes Dichtungselement und wenigstens ein zweites flexibles Dichtungselement umfasst, wobei das erste Dichtungselement in einem Bereich des Schiebers angeordnet ist, der sich in einen ersten in dem Druckraum vorgesehenen Durchlassbereich bewegt, wenn der Schieber in die erste Position bewegt wird, und das wenigstens eine zweite Dichtungselement in einem Bereich des Schiebers angeordnet ist, der sich in wenigstens einen zweiten in dem Druckraum vorgesehenen Durchlassbereich bewegt, wenn der Schieber in die wenigstens eine zweite Position bewegt wird. Dabei ist vorgesehen, dass der erste Durchlassbereich und der wenigstens eine zweite Durchlassbereich jeweils eine Vielzahl voneinander beabstandeter Durchlasselemente aufweisen.

Das vorgestellte Wegeventil dient insbesondere zur Durchführung des vorgestellten Verfahrens.

Es ist vorgesehen, dass das erste flexible Dichtungselement in seinem Querschnitt gegenüber einem Querschnitt des ersten flexiblen Dichtungselements in der wenigstens einen zweiten Position des Schiebers reduziert wird, wenn das erste flexible Dichtungselement in der ersten Position des Schiebers in den ersten Durchlassbereich bewegt wird, wodurch Druckluft von der pneumatischen Anlage durch die Bohrung des Schiebers zu dem Entlüftungsventil geleitet wird.

Weiterhin ist vorgesehen, dass das wenigstens eine zweite flexible Dichtungselement in seinem Querschnitt gegenüber einem Querschnitt in der ersten Position des Schiebers reduziert wird, wenn das wenigstens eine zweite flexible Dichtungselement in der wenigstens einen zweiten Position des Schiebers in den wenigstens einen zweiten Durchlassbereich bewegt wird, wodurch Druckluft durch einen zwischen dem Schieber und der Druckkammer gebildeten Strömungskanal und durch den wenigstens einen zweiten Durchlassbereich von der Versorgungsleitung zu der pneumatischen Anlage geleitet wird.

Ferner ist vorgesehen, dass der wenigstens eine zweite Anschluss und/oder der erste Anschluss wenigstens eine ovale Öffnung aufweist und durch die wenigstens eine ovale Öffnung geleitete Luft das wenigstens eine zweite flexible Dichtungselement zumindest bereichsweise komprimiert und eine materialschonende Bewegung des wenigstens einen zweiten flexiblen Dichtungselements auf in dem wenigstens einen zweiten Durchlassbereich vorgesehene Durchlasselemente ermöglicht und/oder das erste Dichtungselement zumindest bereichsweise komprimiert und eine materialschonende Bewegung des ersten Dichtungselements auf in dem ersten Durchlassbereich vorgesehene Durchlasselemente ermöglicht.

Durch eine ovale Öffnung kann ein Luftstrom bereitgestellt werden, der ein Dichtungselement zumindest bereichsweise komprimiert und eine Versorgung eines von dem Dichtungselement abgedichteten Anschlusses mit Druckluft ermöglicht. Ferner betrifft die vorliegende Erfindung ein Steuerungsventil, das eine Druckkammer, einen Schieber, einen Druckraum, einen ersten Anschluss und wenigstens einen zweiten Anschluss aufweist. Dabei ist vorgesehen, dass der Schieber in dem Druckraum zwischen einer ersten Position und wenigstens einer zweiten Position beweglich angeordnet ist, und wobei der Schieber ein erstes flexibles Dichtungselement und wenigstens ein zweites flexibles Dichtungselement umfasst. Dabei ist weiterhin vorgesehen, dass der wenigstens eine zweite Anschluss und/oder der erste Anschluss wenigstens eine ovale Öffnung aufweist, durch die Druckluft auf das wenigstens eine zweite und/oder das erste flexible Dichtungselement zu leiten und das wenigstens eine zweite und/oder das erste flexible Dichtungselement dadurch zu komprimieren ist, so dass Druckluft von der Druckkammer in den wenigstens einen zweiten Anschluss oder von dem wenigstens einen zweiten Anschluss in die Druckkammer zu leiten ist und/oder Druckluft von der Druckkammer in den ersten Anschluss oder von dem ersten Anschluss in die Druckkammer zu leiten ist.

Ferner betrifft die vorgestellte Erfindung ein Verfahren zum Einstellen eines Betriebsdrucks einer pneumatischen Anlage, bei dem der Betriebsdruck mittels eines mit der pneumatischen Anlage verbundenen Steuerungsventils eingestellt wird, das eine Druckkammer, einen Schieber, einen Druckraum, einen ersten Anschluss und wenigstens einen zweiten Anschluss aufweist. Dabei Ist vorgesehen, dass der Schieber in dem Druckraum zwischen einer ersten Position und wenigstens einer zweiten Position bewegt wird. Weiterhin ist vorgesehen, dass der Schieber ein erstes flexibles Dichtungselement und wenigstens ein zweites flexibles Dichtungselement umfasst. Weiterhin ist vorgesehen, dass der wenigstens eine zweite Anschluss wenigstens eine ovale Öffnung aufweist, durch die Druckluft auf das wenigstens eine zweite flexible Dichtungselement geleitet und das wenigstens eine zweite flexible Dichtungselement dadurch komprimiert wird, so dass Druckluft von der Druckkammer in den wenigstens einen zweiten Anschluss oder von dem wenigstens einen zweiten Anschluss in die Druckkammer geleitet wird und/oder der erste Anschluss wenigstens eine ovale Öffnung aufweist, durch die Druckluft auf das erste flexible Dichtungselement geleitet und das erste flexible Dichtungselement dadurch komprimiert wird, so dass Druckluft von der Druckkammer in den ersten Anschluss oder von dem ersten Anschluss in die Druckkammer geleitet wird.

Das vorgestellte Steuerungsventil dient insbesondere zur Durchführung des Verfahrens zum Einstellen eines Betriebsdrucks einer pneumatischen Anlage, bei dem der Betriebsdruck mittels eines mit der pneumatischen Anlage verbundenen Steuerungsventils eingestellt wird.

Weitere Einzelheiten und Vorteile der Erfindung sollen nun anhand eines in den Zeichnungen näher dargestellten Ausführungsbeispiels erläutert werden.

Es zeigen:
- Fig. 1: ein Wegeventil gemäß dem Stand der Technik;
- Fig. 2: eine perspektivische Ansicht auf eine mögliche Ausgestaltung des erfindungsgemäßen Wegeventils;
- Fig. 3: eine geschnittene Darstellung des Wegeventils aus Figur 2 in einer ersten Betriebsstellung;
- Fig. 4: eine weitere Darstellung des Wegeventils aus Figur 2 in einer zweiten Betriebsstellung;
- Fig. 5: ein Schaltungsschema einer weiteren möglichen Ausgestaltung des erfindungsgemäßen Wegeventils;
- Fig. 6: eine geschnittene Ansicht einer Druckkammer des Wegeventils gemäß Figur 5;
- Fig. 7: eine geschnittene Darstellung des Wegeventils gemäß Figur 5 in einer ersten Betriebsstellung;
- Fig. 8: eine weitere Darstellung des Wegeventils gemäß Figur 5 in einer zweiten Betriebsstellung;
- Fig. 9: eine Detailansicht eines Durchlassbereichs gemäß einer möglichen Ausgestaltung des erfindungsgemäßen Wegeventils.

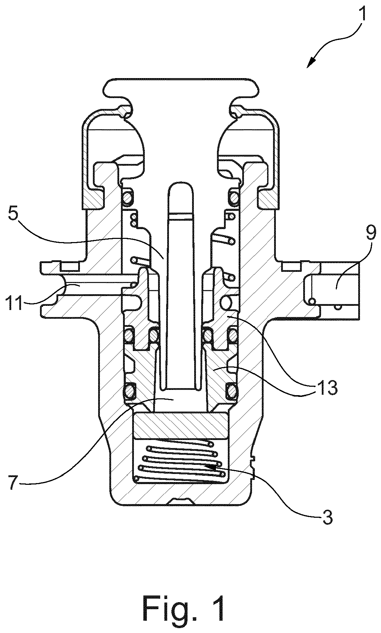

Flg. 1 zeigt in geschnittener Ansicht ein Wegeventil 1 gemäß dem Stand der Technik. Über eine Rückstellfeder 3 wird eine Kraft bereitgestellt, die einen Schieber 5 in einer Ausgangsstellung hält. Um zwischen einer Verbindung eines Zweiganschlusses 7 mit einem Versorgunganschluss 9 oder einem Entlüftungsanschluss 11 umzuschalten, sind mechanische Elemente 13 vorgesehen, die sich in Abhängigkeit einer Stellung des Schiebers 5 bewegen und Versorgungskanäle bereitstellen oder abdichten.

Da die mechanischen Elemente 13 um den Schieber 5 herum angeordnet sind, benötigen die mechanischen Elemente 13 viel Bauraum, so dass das Wegeventil 1 an sich ebenfalls viel Bauraum benötigt.

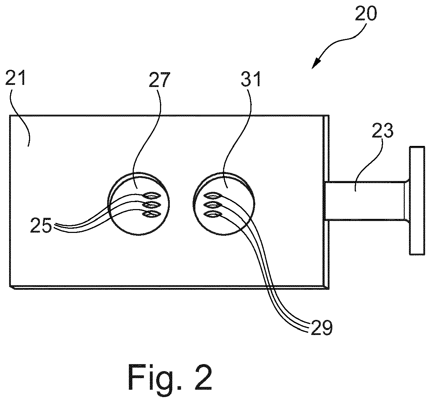

Fig. 2 zeigt eine perspektivische Ansicht auf eine mögliche Ausgestaltung des erfindungsgemäßen Wegeventils 20.

Das Wegeventil 20 umfasst eine Druckkammer 21.

Die Druckkammer 21 hat die Funktion, in das Wegeventil 20 geleitete Druckluft aufzunehmen und in dem Wegeventil 20 zu verteilen.

Das Wegeventil 20 umfasst ferner einen Schieber 23.

Der Schieber 23 hat die Funktion, in das Wegeventil 20 geleitete Druckluft zu jeweiligen Anschlüssen des Wegeventils 20 zu leiten.

Ferner umfasst das Wegeventil 20 einen Entlüftungsanschluss 27.

Der Entlüftungsanschluss 27 hat die Funktion, das Wegeventil 20 zu entlüften.

Weiterhin umfasst das Wegeventil 20 ovale Öffnungen 25.

Die ovalen Öffnungen 25 haben die Funktion, Druckluft aus dem Entlüftungsanschluss 27 zu leiten und, dadurch bedingt, das Wegeventil 20 zu entlüften.

Ferner umfasst das Wegeventil 20 ovale Öffnungen 29.

Die ovalen Öffnungen 29 haben die Funktion, das Wegeventil 20 durch den Versorgungsanschluss 31 mit Druckluft zu versorgen.

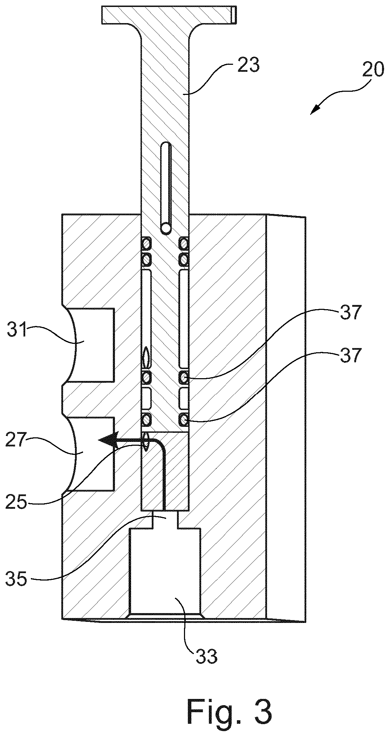

Fig. 3 zeigt eine geschnittene Darstellung des erfindungsgemäßen Wegeventils 20 in einer ersten Betriebsstellung.

Hier umfasst das Wegeventil 20 einen Zweiganschluss 33.

Der Zweiganschluss 33 kann mit einer pneumatischen Anlage, wie bspw. einer Bremse verbunden sein.

In der ersten Betriebsstellung des Wegeventils 20 ist der Entlüftungsanschluss 27 mit dem Zweiganschluss 33 verbunden.

In der ersten Betriebsstellung strömt Druckluft durch den Zweiganschluss 33 in den Entlüftungsanschluss 27, wie durch Pfeil 35 angedeutet.

Weiterhin strömt in der ersten Betriebsstellung Druckluft durch den Entlüftungsanschluss 27 in ein Entlüftungsventil und durch das Entlüftungsventil in eine Umgebung des Wegeventils 20.

Eine Funktion der ovalen Öffnungen 25 liegt darin, eine mathematische Funktion bzw. einen Verlauf eines Aufbaus eines Drucks, mit dem die Druckluft in den Entlüftungsanschluss 27 und entsprechend in das Entlüftungsventil strömt, vorzugeben.

Durch die ovalen Öffnungen 25 wird der Druck, mit dem die Druckluft auf in dem Entlüftungsanschluss 27 bzw. an dem Schieber 23 angeordnete Dichtungselemente 37 einwirkt, langsam aufgebaut, so dass die Dichtungselemente 37 keiner Belastungsspitze ausgesetzt werden und entsprechend langlebig sind.

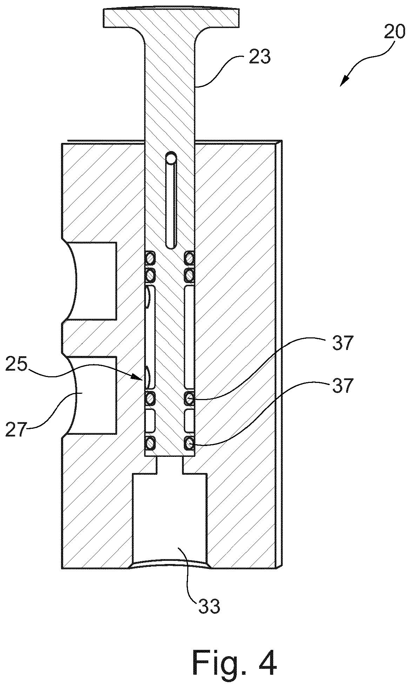

Fig. 4 zeigt eine weitere Darstellung des Wegeventils 20 aus Figur 2 in einer zweiten Betriebsstellung.

In der zweiten Betriebsstellung des Wegeventils 20 ist der Schieber 23 in Richtung des Anschlusses 33 geschoben.

Hier haben die Dichtungselemente 37 die Funktion, den Zweiganschluss 33 gegenüber dem Entlüftungsanschluss 27 abzudichten, so dass keine Druckluft aus dem Zweiganschluss 33 zu den ovalen Öffnungen 25 strömt.

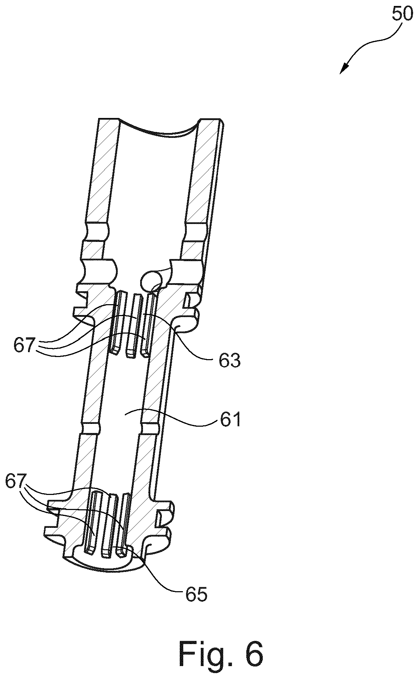

Fig. 6 zeigt ein Schaltungsschema einer weiteren möglichen Ausgestaltung des erfindungsgemäßen Wegeventils 50.

Hier umfasst das Wegeventil 50 einen Zweiganschluss 41.

Der Zweiganschluss hat die Funktion eine pneumatischen Anlage mit dem Wegeventil zu verbinden.

Weiterhin umfasst das Wegeventil 50 einen Versorgungsanschluss 43.

Der Versorgungsanschluss 43 hat die Funktion, das Wegeventil 50 mit Druckluft aus einem Speicher zu versorgen.

Weiterhin umfasst das Wegeventil 50 ein Entlüftungsventil 45.

Das Entlüftungsventil 45 hat die Funktion, das Wegeventil 50 zu entlüften.

Ferner umfasst das Wegeventil 50 einen Schieber 53.

Der Schieber 53 hat die Funktion, je nach Stellung des Schiebers 53, den Zweiganschluss 41 mit dem Versorgungsanschluss 43 oder dem Entlüftungsventil 45 zu verbinden.

Ferner umfasst das Wegeventil 50 ein Federelement 49.

Das Federelement 49 ist hier mittels in das Wegeventil 50 strömender Druckluft realisiert, so dass der Schieber 53 durch die in das Wegeventil 50 strömende Druckluft bzw. einen durch die Druckluft bereitgestellten Druck nach oben, d. h. von dem Federelement 49 weg, bewegt wird.

Die in das Wegeventil 50 strömende Druckluft stellt eine Gegenkraft zu einer Bewegung des Schiebers 53 in Richtung des Federelements 49 bereit, wenn das Entlüftungsventil 45 nicht mit dem Zweiganschluss 41 oder dem Versorgungsanschluss 43 verbunden ist.

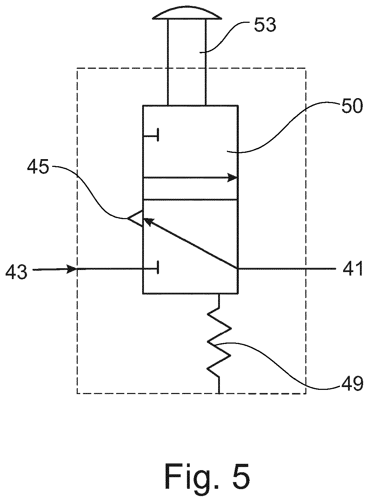

Flg. 6 zeigt eine geschnittene Ansicht einer Druckkammer 61 des Wegeventils 50 gemäß Figur 5.

Die Druckkammer 61 umfasst einen ersten Durchlassbereich 63 und einen zweiten Durchlassbereich 65.

Sowohl der erste Durchlassbereich 63 als auch der zweite Durchlassbereich 65 weisen beabstandete Durchlasselemente 67 auf, die hier rippenförmig sind.

Die Durchlasselemente 67 sind insbesondere an Ihren jeweiligen Enden abgerundet, um ein harmonisches und materialschonendes auf- bzw. abgleiten eines Dichtungselements auf die Durchlasselemente 67 zu ermöglichen.

Die Durchlasselemente 67 haben die Funktion, ein jeweiliges Dichtungselement zumindest bereichsweise zu komprimieren und, dadurch bedingt, mindestens einen Strömungskanal zum Strömen von Druckluft an dem Dichtungselement vorbei, zu ermöglichen.

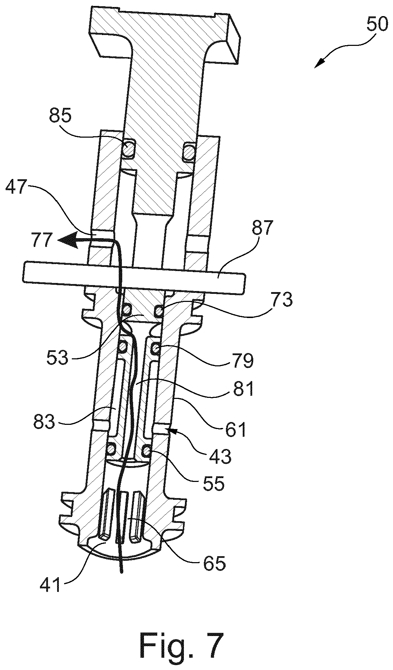

Fig. 7 zeigt eine geschnittene Darstellung des Wegeventils 50 in einer ersten Betriebsstellung, In der der Schieber 53 in eine erste Position gebracht ist.

In der ersten Position des Schiebers 53 ist ein zweites Dichtungselement 55 außerhalb des zweiten Durchlassbereichs 65 angeordnet.

Durch das zweite Dichtungselement 55 wird ein Weg von dem Versorgungsanschluss 43 zu dem Zweiganschluss 41 dicht verschlossen, so dass der Versorgungsanschluss 43 nicht mit dem Zweiganschluss 41 verbunden bzw. von dem Zweiganschluss 41 getrennt ist.

Weiterhin ist in der ersten Position des Schiebers 53 ein erstes Dichtungselement 73 in dem ersten Durchlassbereich 63, wie er in Fig. 6 gezeigt ist, angeordnet, so dass Druckluft von dem Zweiganschluss 41 zu einem Entlüftungsanschluss 75 und dem dort vorgesehenen Entlüftungsventil strömen kann, wie durch Pfeil 77 angedeutet.

Dadurch bedingt, dass das erste Dichtungselement 73 in dem ersten Durchlassbereich 63 angeordnet ist, wird das erste Dichtungselement 73 gestaucht bzw. komprimiert und insbesondere im Bereich jeweiliger Abstände zwischen jeweiligen Durchlasselementen 67, wie sie in Fig. 6 gezeigt sind, von der Druckkammer 61 beabstandet.

Durch die Beabstandung des ersten Dichtungselements 73 von der Druckkammer 61 bilden sich Strömungskanäle, durch die Druckluft von dem Zweiganschluss 41 durch eine Bohrung 81 des Schiebers 53 hindurch an dem ersten Dichtungselement 73 vorbei zu dem Entlüftungsanschluss 47, wie durch Pfeil 77 angedeutet, strömen kann.

Durch das zweite Dichtungselement 55 und ein drittes Dichtungselement 79 wird eine Kammer 83 gebildet, in der von dem Versorgungsanschluss 43 einströmende Druckluft gespeichert wird.

Um ein Austreten von Druckluft aus dem Wegeventil 50 zu verhindern, ist ferner ein viertes Dichtungselement 85 in einem Kopfbereich des Schiebers 53 vorgesehen.

Das Wegeventil 50 kann an einer Schalttafel 87 angeordnet sein.

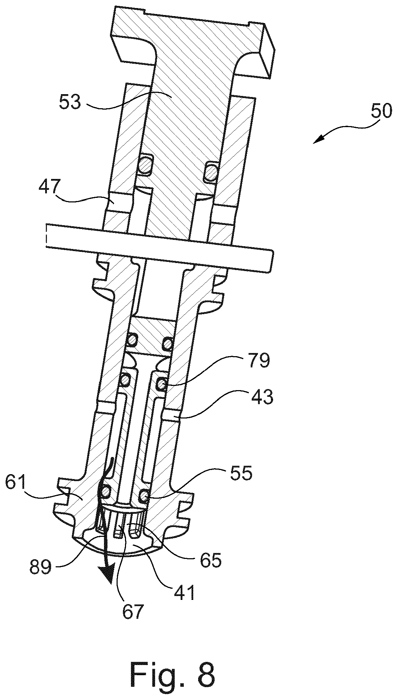

Fig. 8 zeigt eine weitere Darstellung des Wegeventils 50 in einer zweiten Betriebsstellung, in der der Schieber 53 in eine zweite Position gebracht ist.

Hier ist das zweite Dichtungselement 55, das wie jedes weitere Dichtungselement bspw. aus Gummi, Kunststoff oder jedem weiteren flexiblen Material bzw. einer Kombination aus diesen Materialien bestehen kann, in dem zweiten Durchlassbereich 65 angeordnet.

Das Wegeventil 50 umfasst in dem zweiten Durchlassbereich 65 vorgesehene Durchlasselemente 67.

Die Durchlasselemente 67 haben die Funktion, das zweite Dichtungselement 55 zu stauchen bzw. zu komprimieren und von einer Wand der Druckkammer 61 zu beabstanden, wenn das zweite Dichtungselement 55 in den zweiten Durchlassbereich 65 bewegt wird.

Wenn das zweite Dichtungselement 55 in den zweiten Durchlassbereich 65 bewegt wird strömt Druckluft von dem Versorgungsanschluss 43 zu dem Zweiganschluss 41, wodurch eine an dem Zweiganschluss 41 angeordnete pneumatische Anlage mit Druckluft versorgt wird, wie durch Pfeil 89 angedeutet.

Das dritte Dichtungselement 79 hat hier die Funktion, durch den Versorgungsanschluss 43 einströmende Druckluft am Strömen zu dem Entlüftungsanschluss 47 zu hindern.

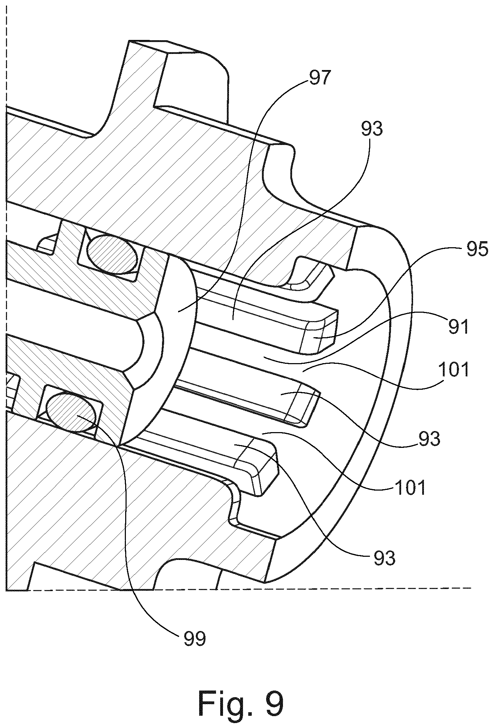

Fig. 9 zeigt eine Detailansicht eines zweiten Durchlassbereichs 91 gemäß einer möglichen Ausgestaltung des erfindungsgemäßen Wegeventils.

Der zweite Durchlassbereich 91 weist Durchlasselemente 93.

Die Durchlasselemente 93 erstrecken sich radial und in Bewegungsrichtung eines Schiebers 97 um den zweiten Durchlassbereich 91 herum. Dabei sind die Durchlasselemente 93 voneinander beabstandet.

Die Durchlasselemente 93 weisen konisch geformte bzw. abgerundete Enden 95 auf.

Die konisch geformten bzw. abgerundeten bzw. abgeflachten Enden 95 haben die Funktion, ein harmonisches bzw. leichtgängiges Auf- bzw. Abgleiten eines mit dem Schieber 97 bewegten Dichtungselements 99 auf die Durchlasselemente 93 zu ermöglichen.

Zwischen den Durchlasselementen 93 sind Abstände vorgesehen.

Die Abstände zwischen den Durchlasselementen dienen als Strömungskanäle 101.

Die Strömungskanäle 101 haben die Funktion, Druckluft an dem Dichtungselement 99 vorbei zu leiten, wenn das Dichtungselement 99 in dem Durchlassbereich 91 angeordnet ist und die Durchlasselemente 93 das Dichtungselement 99 komprimieren, so dass das Dichtungselement 99 von einer Wand einer die Durchlasselemente 93 bildenden Druckkammer durch die Strömungskanäle 101 beabstandet Ist.

### Bezugszeichenliste

- 1: Wegeventil
- 3: Rückstellfeder
- 5: Schieber
- 7: Zweiganschluss
- 9: Versorgungsanschluss
- 11: Entlüftungsanschluss
- 13: mechanische Elemente
- 20: Wegeventil
- 21: Druckkammer
- 23: Schieber
- 25: ovale Öffnungen
- 27: Entlüftungsanschluss
- 29: ovale Öffnungen
- 31: Versorgungsanschluss
- 33: Zweiganschluss
- 35: Pfeil
- 37: Dichtungselemente
- 41: Zweiganschluss
- 43: Versorgungsanschluss
- 45: Entlüftungsventil
- 47: Entlüftungsanschluss
- 49: Federelement
- 50: Wegeventil
- 53: Schieber
- 55: zweites Dichtungselement
- 61: Druckkammer
- 63: erster Durchlassbereich
- 65: zweiter Durchlassbereich
- 67: Durchlasselement
- 73: erstes Dichtungselement
- 75: Entlüftungsanschluss
- 77: Pfeil
- 79: drittes Dichtungselement
- 81: Bohrung
- 83: Kammer
- 85: viertes Dichtungselement
- 87: Schalttafel
- 89: Pfeil
- 91: Durchlassbereich
- 93: Durchlasselement
- 95: Ende
- 97: Schieber
- 99: Dichtungselement
- 101: Strömungskanal

## Patentansprüche

1. Wegeventil für eine pneumatische Schaltung, mit einer Druckkammer (21, 61) und einem Schieber (23, 53, 97), wobei die Druckkammer (21, 61) einen Druckraum, einen ersten Anschluss (41, 33) und wenigstens einen zweiten Anschluss (27, 31, 43, 47) aufweist, und wobei der Schieber (23, 53, 97) in dem Druckraum zwischen einer ersten Position und wenigstens einer zweiten Position beweglich angeordnet ist, und wobei der Schieber (23, 53, 97) ein erstes flexibles Dichtungselement (73) und wenigstens ein zweites flexibles Dichtungselement (37, 55) umfasst, und wobei das erste Dichtungselement (73) in einem Bereich des Schiebers (23, 53, 97) angeordnet ist, der sich in einem ersten in dem Druckraum vorgesehenen Durchlassbereich (63) befindet, wenn sich der Schieber (23, 53, 97) in der ersten Position befindet, und wobei das wenigstens eine zweite Dichtungselement (37, 55) in einem Bereich des Schiebers (23, 53, 97) angeordnet ist, der sich in wenigstens einem zweiten in dem Druckraum vorgesehenen Durchlassbereich (65) befindet, wenn sich der Schieber (23, 53, 97) in der wenigstens einen zweiten Position befindet, und wobei der erste Durchlassbereich (63) und der wenigstens eine zweite Durchlassbereich (65) jeweils eine Vielzahl voneinander beabstandeter Durchlasselemente (67, 93) aufweisen,
**dadurch gekennzeichnet, dass**
das Wegeventil (20, 50) wenigstens eine Arretiervorrichtung zum Lösen einer Verbindung des Schiebers (23, 53, 97) zu der Druckkammer (21, 61) umfasst, wobei der Schieber (23, 52, 97) durch die Arretiervorrichtung in der zweiten Position arretierbar ist.

2. Wegeventil nach Anspruch 1,
**dadurch gekennzeichnet, dass**
jeweilige Durchlasselemente (67, 93) der Vielzahl voneinander beabstandeter Durchlasselemente (67, 93) als voneinander beabstandete Rippen ausgestaltet sind, die ein Volumen des Druckraums der Druckkammer (21, 61) im Bereich der Rippen reduzieren.

3. Wegeventil nach Anspruch 1 oder Anspruch 2,
**dadurch gekennzeichnet, dass**
die Durchlasselemente (67, 93) wenigstens an ihren in Bewegungsrichtung des Schiebers vorgesehenen Enden (95) abgeflacht, insbesondere konisch abgeflacht, geformt sind, um ein materialschonendes Aufgleiten eines jeweiligen flexiblen Dichtungselements (37, 55, 73, 79, 85) auf die Durchlasselemente (67, 93) zu ermöglichen.

4. Wegeventil nach einem der voranstehenden Ansprüche,
**dadurch gekennzeichnet, dass**
jeweilige Durchlasselemente (67, 93) einen Querschnitt aufweisen, der einem Querschnitt eines jeweiligen auf die Durchlasselemente (67, 93) zu bewegenden flexiblen Dichtungselements (37, 55, 73, 79, 85) entspricht.

5. Wegeventil nach einem der voranstehenden Ansprüche,
**dadurch gekennzeichnet, dass**
das Wegeventil (20, 50) ein 3/2 Wegeventil mit einem ersten Durchlassbereich (63), einem zweiten Durchlassbereich (65), einem Versorgungsanschluss (43), einem Zweiganschluss (41) und einem Entlüftungsanschluss (75) ist, wobei der Schieber (23, 53, 97) eine Bohrung (81) aufweist, die den Entlüftungsanschluss (75) mit dem Zweiganschluss (41) verbindet, wenn der Schieber (23, 53, 97) in die erste Position gebracht ist,
und wobei der Schieber (23, 53, 97) in einem Bereich zwischen dem ersten flexiblen Dichtungselement (73) und dem wenigstens einen zweiten flexiblen Dichtungselement (37, 55) beabstandet von einer Wand der Druckkammer (21, 61) ist und zusammen mit der Wand der Druckkammer (21, 61) einen Strömungskanal bildet, der den Versorgungsanschluss (43) mit dem Zweiganschluss (41) verbindet, wenn der Schieber (23, 53, 97) in die wenigstens eine zweite Position gebracht ist.

6. Wegeventil nach Anspruch 5,
**dadurch gekennzeichnet, dass**
die Bohrung (81) von einem sich in dem Druckraum bewegenden unteren Ende des Schiebers (23, 53, 97) bis zu einem in dem Schieber (23, 53, 97) gebildeten Auslassbereich verläuft, wobei der Auslassbereich in Richtung des Entlüftungsanschlusses (75) von dem ersten flexiblen Dichtungselement (73) und in Richtung des Zweiganschlusses (41) von einem dritten flexiblen Dichtungselement (79) umgeben ist, und wobei sich das erste flexible Dichtungselement (73) in dem ersten Durchlassbereich (63) befindet und, dadurch bedingt, eine Verbindung zwischen dem Versorgungsanschluss (43) und dem Entlüftungsanschluss (75) bereitstellt, wenn sich der Schieber (23, 53, 97) in der ersten Position befindet, und wobei sich das erste flexible Dichtungselement (73) außerhalb des ersten Durchlassbereichs (63) befindet und, dadurch bedingt, den Versorgungsanschluss (43) von dem Entlüftungsanschluss (75) trennt, wenn sich der Schieber (23, 53, 97) in der zweiten Position befindet.

7. Wegeventil nach Anspruch 6,
**dadurch gekennzeichnet, dass**
der in dem Schieber (23, 53, 97) gebildete Auslassbereich mit einer Entlüftungskammer verbunden ist, wenn sich der Schieber (23, 53, 97) in der ersten Position befindet, wobei die Entlüftungskammer an einem dem Auslassbereich entgegengesetzten Ende mittels wenigstens einem vierten flexiblen Dichtungselement (85) abgedichtet ist.

8. Wegeventil nach einem der voranstehenden Ansprüche,
**dadurch gekennzeichnet, dass**
der wenigstens eine zweite Anschluss (27, 31, 43, 47) und/oder der erste Anschluss (41, 33) wenigstens eine ovale Öffnung (25, 29) aufweist.

9. Wegeventil nach Anspruch 8,
**dadurch gekennzeichnet, dass**
die wenigstens eine Öffnung (25, 29) einen elliptischen Querschnitt aufweist.

10. Wegeventil nach einem der voranstehenden Ansprüche,
**dadurch gekennzeichnet, dass**
das Wegeventil (20, 50) ein Park- und Rangierventil eines Fahrzeugs, insbesondere eines Lastkraftwagens oder eines Anhängers ist.

11. Verfahren zum Einstellen eines Betriebsdrucks einer pneumatischen Anlage, bei dem der Betriebsdruck der pneumatischen Anlage mittels eines Wegeventils (20, 50) eingestellt wird, das eine Druckkammer (21, 61) und einen Schieber (23, 53, 97) umfasst, wobei die Druckkammer (21, 61) einen Druckraum, einen ersten Anschluss (33, 41) und wenigstens einen zweiten Anschluss (27, 31, 43, 47) aufweist,
und bei dem der Schieber (23, 53, 97) in dem Druckraum der Druckkammer (21, 61) zwischen einer ersten Position, bei der die pneumatische Anlage mit einem Entlüftungsventil (45) verbunden wird, und einer zweiten Position, bei der die pneumatische Anlage mit einer Versorgungsleitung zum Versorgen der pneumatischen Anlage mit Druckluft verbunden wird, bewegt wird,
und wobei der Schieber (23, 53, 97) ein erstes flexibles Dichtungselement (73) und wenigstens ein zweites flexibles Dichtungselement (55) umfasst, und wobei das erste Dichtungselement (73) in einem Bereich des Schiebers (23, 53, 97) angeordnet ist, der sich in einen ersten in dem Druckraum vorgesehenen Durchlassbereich (63) bewegt, wenn der Schieber (23, 53, 97) in die erste Position bewegt wird,
und wobei das wenigstens eine zweite Dichtungselement (55) in einem Bereich des Schiebers (23, 53, 97) angeordnet ist, der sich in wenigstens einen zweiten in dem Druckraum vorgesehenen Durchlassbereich (65) bewegt, wenn der Schieber (23, 52, 97) in die wenigstens eine zweite Position bewegt wird, und wobei der erste Durchlassbereich (63) und der wenigstens eine zweite Durchlassbereich (65) jeweils eine Vielzahl voneinander beabstandeter Durchlasselemente (67, 93) aufweisen,
**dadurch gekennzeichnet, dass**
das Wegeventil (20, 50) wenigstens eine Arretiervorrichtung zum Lösen einer Verbindung des Schiebers (23, 53, 97) zu der Druckkammer (21, 61) umfasst, wobei der Schieber (23, 52, 97) durch die Arretiervorrichtung in der zweiten Position arretierbar ist.

12. Verfahren nach Anspruch 11,
**dadurch gekennzeichnet, dass**
das erste flexible Dichtungselement (73) in seinem Querschnitt gegenüber einem Querschnitt in der wenigstens einen zweiten Position des Schiebers (23, 53, 97) reduziert wird, wenn das erste flexible Dichtungselement (73) in der ersten Position des Schiebers (23, 53, 97) in den ersten Durchlassbereich (63) bewegt wird, wodurch Druckluft von der pneumatischen Anlage durch eine Bohrung (81) des Schiebers (23, 53, 97) zu dem Entlüftungsventil (45) geleitet wird, und wobei
das wenigstens eine zweite flexible Dichtungselement (55) in seinem Querschnitt gegenüber einem Querschnitt in der ersten Position des Schiebers (23, 53, 97) reduziert wird, wenn das wenigstens eine zweite flexible Dichtungselement (55) in der wenigstens einen zweiten Position des Schiebers (23, 53, 97) in den wenigstens einen zweiten Durchlassbereich (65) bewegt wird, wodurch Druckluft durch einen zwischen dem wenigstens einen zweiten Dichtungselement (55) und der Druckkammer (21, 61) gebildeten Strömungskanal und durch den wenigstens einen zweiten Durchlassbereich (65) von der Versorgungsleitung zu der pneumatischen Anlage geleitet wird.

13. Verfahren nach Anspruch 11 oder 12,
**dadurch gekennzeichnet, dass**
der wenigstens eine zweite Anschluss (27, 31, 43, 47) und/oder der erste Anschluss (41, 33) wenigstens eine ovale Öffnung (25, 29) aufweist und durch die wenigstens eine ovale Öffnung (25, 29) geleitete Luft das wenigstens eine zweite flexible Dichtungselement (55) zumindest bereichsweise komprimiert und eine materialschonende Bewegung des wenigstens einen zweiten flexiblen Dichtungselements (55) auf in dem wenigstens einen zweiten Durchlassbereich (65) vorgesehene Durchlasselemente (67, 93) ermöglicht und/oder das erste Dichtungselement zumindest bereichsweise komprimiert und eine materialschonende Bewegung des ersten Dichtungselements (73) auf in dem ersten Durchlassbereich (63) vorgesehene Durchlasselemente (67, 93) ermöglicht.

## Claims

1. Directional valve for a pneumatic circuit, with a pressure chamber (21, 61) and a slider (23, 53, 97), wherein the pressure chamber (21, 61) has a pressure space, a first connection (41, 33) and at least one second connection (27. 31, 43, 47), and wherein the slider (23, 53, 97) is arranged in the pressure space and can move between a first position and at least one second position, and wherein the slider (23, 53, 97) comprises a first flexible sealing element (73) and at least one second flexible sealing element (37, 55), and wherein the first sealing element (73) is arranged in an area of the slider (23, 53, 97) which is located in a first passage area (63) provided in the pressure space when the slider (23, 53, 97) is in the said first position, and wherein the at least one second sealing element (37, 55) is arranged in an area of the slider (23, 53, 97) which is located in a second passage area (65) provided in the pressure space when the slider (23, 53, 97) is in the said at least one second position, and wherein the first passage area (63) and the at least one second passage area (65) each comprise a plurality of passage elements (67, 93) spaced apart from one another,
**characterised in that**
the directional valve (20, 50) comprises at least one detent device for releasing a connection of the slider (23, 53, 97) to the pressure chamber (21, 61), such that the slider (23, 53, 97) can be detained in the second position by means of the detent device.

2. Directional valve according to Claim 1,
**characterised in that**
each of the passage elements (67, 93) of the plurality of passage elements (67, 93) spaced apart from one another is designed in the form of ribs spaced apart from one another, which reduce a volume of the pressure space of the pressure chamber (21, 61) in the area of the said ribs.

3. Directional valve according to Claims 1 or 2,
**characterised in that**
at least at their ends (95) provided in the movement direction of the slider, the passage elements (67, 93) are of flattened, in particular conically flattened shape, in order to enable a respective flexible sealing element (37, 55, 73, 79, 85) to slide onto the passage elements in a material-protecting manner.

4. Directional valve according to any of the preceding claims,
**characterised in that**
each of the passage elements (67, 93) has a cross-section that corresponds to a cross-section of a respective flexible sealing element (37, 55, 73, 79, 85) which is to move over the passage elements (67, 93).

5. Directional valve according to any of the preceding claims,
**characterised in that**
the directional valve (20, 50) is a 3/2-way directional valve with a first passage area (63), a second passage area (65), a supply connection (43), a branch connection (41) and a venting connection (75), wherein the slider (23, 53, 97) has a bore (81) that connects the venting connection (75) to the branch connection (41) when the slider (23, 53, 97) is moved to the first position,
and wherein, in an area between the first flexible sealing element (73) and the at least one second flexible sealing element (37, 55) the slider (23, 53, 97) is a distance away from a wall of the pressure chamber (21, 61) and, together with the wall of the pressure chamber (21, 61), forms a flow channel that connects the supply connection (43) to the branch connection (41) when the slider (23, 53, 97) is moved to the at least one second position.

6. Directional valve according to Claim 5,
**characterised in that**
the bore (81) extends from a lower end of the slider (23, 53, 97) that moves in the pressure space to an outlet area formed in the slider (23, 53, 97), such that the said outlet area is surrounded in the direction of the venting connection (75) by the first flexible sealing element (73) and in the direction of the branch connection (41) by a third flexible sealing element (79), and wherein the first flexible sealing element (73) is located in the first passage area (63) and, as a result, provides a connection between the supply connection (43) and the venting connection (75) when the slider (23, 53, 97) is in the first position, and wherein the first flexible sealing element (73) is outside the first passage area (63) and, as a result, the slider (23, 53, 97) separates the supply connection (43) from the venting connection (75) when it is in the second position.

7. Directional valve according to Claim 6,
**characterised in that**
the outlet area formed in the slider (23, 53, 97) is connected to a venting chamber when the slider (23, 53, 97) is in the first position, and the said venting chamber is sealed by means of at least one fourth flexible sealing element (85) at an end opposite to the outlet area.

8. Directional valve according to any of the preceding claims,
**characterised in that**
the at least one second connection (27, 31, 43, 47) and/or the first connection (41, 33) have/has at least one oval opening (25, 29).

9. Directional valve according to Claim 8,
**characterised in that**
the at least one opening (25, 29) has an elliptical cross-section.

10. Directional valve according to any of the preceding claims,
**characterised in that**
the directional valve (20, 50) is a parking and manoeuvring valve of a vehicle, in particular a truck or a trailer.

11. Method for producing an operating pressure of a pneumatic system, in which the operating pressure of the pneumatic system is produced by means of a directional valve (20, 50) which comprises a pressure chamber (21, 61) and a slider (23, 53, 97), wherein the pressure chamber (21, 61) comprises a pressure space, a first connection (33, 41) and at least one second connection (27, 31, 43, 47), and in which the slider (23, 53, 97) moves in the pressure space of the pressure chamber (21, 61) between a first position in which the pneumatic system is connected to a venting valve (45), and a second position in which the pneumatic system is connected to a supply line for supplying the pneumatic system with compressed air,
and wherein the slider (23, 53, 97) has a first flexible sealing element (73) and at least one second flexible sealing element (55), and wherein the first sealing element (73) is arranged in an area of the slider (23, 53, 97) which moves in a passage area (63) provided in the pressure space when the slider (23, 53, 97) is moved to the said first position,
and wherein the at least one second sealing element (55) is arranged in an area of the slider (23, 53, 97) which moves in at least one second passage area (65) provided in the pressure space when the slider (23, 53, 97) is moved to the at least one second position, and wherein the first passage area (63) and the at least one second passage area (65) each comprise a plurality of passage elements (67, 93) spaced apart from one another,
**characterised in that**
the directional valve (20, 50) comprises a detent device for releasing a connection between the slider (23, 53, 97) and the pressure chamber (21, 61), such that the slider (23, 53, 97) can be detained in the second position by means of the said detent device.

12. Method according to Claim 11,
**characterised in that**
the first flexible sealing element (73), in its cross-section, is reduced relative to a cross-section in the at least one second position of the slider (23, 53, 97) when the first flexible sealing element (73) is moved to the first position of the slider (23, 53, 97) in the first passage area (73), whereby compressed air passes from the pneumatic system through the bore (81) of the slider (23, 53, 97) to the venting valve (45), and wherein the at least one second flexible sealing element (55), in its cross-section, is reduced relative to a cross-section in the first position of the slider (23, 53, 97) when the at least one second flexible sealing element (55) is moved to the at least one second position of the slider (23, 53, 97) in the at least one second passage area (65), whereby compressed air passes through a flow channel formed between the at least one second sealing element (55) and the pressure chamber (21, 61) and through the at least one second passage area (65) from the supply line to the pneumatic system.

13. Method according to Claims 11 or 12,
**characterised in that**
the at least one second connection (27, 31, 43, 47) and/or the first connection (41, 33) has at least one oval opening (25, 29), and air passed through the at least one oval opening (25, 29) compresses the at least one second sealing element (55) at least in some areas and enables a material-protecting movement of the at least one second sealing element (55) over the passage elements (67, 93) provided in the at least one second passage area (65), and/or compresses the first sealing element at least in some areas and enables a material-protecting movement of the first sealing element (73) over the passage elements (67, 93) provided in the first passage area (63).

## Revendications

1. Vanne à plusieurs voies d'un circuit pneumatique, comprenant une chambre (21, 61) sous pression et un tiroir (23, 53, 97), dans laquelle la chambre (21, 61) sous pression a un espace sous pression, un premier raccord (41, 33) et au moins un deuxième raccord (27, 31, 43, 47) et dans laquelle le tiroir (23, 53, 97) est monté mobile dans l'espace sous pression entre une première position et au moins une deuxième position et dans laquelle le tiroir (23, 53, 97) comprend un premier élément (73) souple d'étanchéité et au moins un deuxième élément (37, 55) souple d'étanchéité et dans laquelle le premier élément (73) d'étanchéité est disposé dans une partie du tiroir (23, 53, 97), qui se trouve dans une première partie (63) de passage prévue dans l'espace sous pression, si le tiroir (23, 53, 97) se trouve dans la première position et dans laquelle le au moins deuxième élément (37, 55) d'étanchéité est disposé dans une partie du tiroir (23, 53, 97), qui se trouve dans au moins une deuxième partie (65) de passage prévue dans l'espace sous pression, si le tiroir (23, 53, 97) se trouve dans la au moins une deuxième position et dans laquelle la première partie (63) de passage et la au moins une deuxième partie (65) de passage ont chacune une pluralité d'éléments (67, 93) de passage à distance les uns des autres,
**caractérisée en ce que**
la vanne (20, 50) à plusieurs voies comprend au moins un dispositif d'arrêt pour défaire une liaison du tiroir (23, 53, 97) avec la chambre (21, 61) sous pression, le tiroir (23, 52, 97) pouvant être arrêté dans la deuxième position par le dispositif d'arrêt.

2. Vanne à plusieurs voies suivant la revendication 1,
**caractérisée en ce que**
les éléments (67, 93) de passage respectifs de la pluralité d'éléments (76, 83) de passage à distance les uns des autres sont sous la forme de nervures à distance les unes des autres, qui réduisent un volume de l'espace sous pression de la chambre (21, 61) sous pression dans la partie des nervures.

3. Vanne à plusieurs voies suivant la revendication 1 ou la revendication 2,
**caractérisée en ce que**
les éléments (67, 93) de passage sont aplatis au moins à leurs extrémités (95) prévues dans la direction de déplacement du tiroir, en étant notamment aplatis de manière conique, pour rendre possible un glissement ménageant les matériaux d'un élément (37, 55, 73, 79, 85) souple d'étanchéité respectif sur les éléments (67, 93) de passage.

4. Vanne à plusieurs voies suivant l'une des revendications précédentes,
**caractérisée en ce que**
les éléments (67, 93) de passage respectifs ont une section transversale, qui correspond à une section transversale d'un élément (37, 55, 73, 79, 85) souple d'étanchéité respectif se déplaçant sur les éléments (67, 93) de passage.

5. Vanne à plusieurs voies suivant l'une des revendications précédentes,
**caractérisée en ce que**
la vanne (20, 50) à plusieurs voies est une vanne à 3/2 voies ayant une première partie (63) de passage, une deuxième partie (65) de passage, un raccord (43) d'alimentation, un raccord (41) de dérivation et un raccord (75) de mise à l'atmosphère, dans laquelle le tiroir (23, 53, 97) a un trou (81), qui met le raccord (75) de mise à l'atmosphère en communication avec le raccord (41) de dérivation si le tiroir (23, 53, 97) est mis dans la première position,
et dans laquelle le tiroir (23, 53, 97) est, dans une partie entre le premier élément (73) souple d'étanchéité et le au moins deuxième élément (37, 55) souple d'étanchéité, à distance d'une paroi de la chambre (21, 61) sous pression et forme, ensemble avec la paroi de la chambre (21, 61) sous pression, un conduit d'écoulement, qui met le raccord (43) d'alimentation en communication avec le raccord (41) de dérivation si le tiroir (23, 53, 97) est mis dans la au moins deuxième position.

6. Vanne à plusieurs voies suivant la revendication 5,
**caractérisée en ce que**
le trou (81) s'étend d'une extrémité inférieure, se déplaçant dans l'espace sous pression, du tiroir (23, 53, 97) jusqu'à une partie de sortie, formée dans le tiroir (23, 53, 97), dans laquelle la partie de sortie est, dans la direction du raccord (75) de mise à l'atmosphère, entourée du premier élément (73) souple d'étanchéité et, dans la direction du raccord (41) de dérivation, d'un troisième élément (79) souple d'étanchéité et dans laquelle le premier élément (73) souple d'étanchéité se trouve dans la première partie (63) de passage et, en raison de cela, procure une communication entre le raccord (43) d'alimentation et le raccord (75) de mise à l'atmosphère si le tiroir (23, 53, 97) se trouve dans la première position, et dans laquelle le premier élément (73) souple d'étanchéité se trouve à l'extérieur de la première partie (63) de passage et, en raison de cela, sépare le raccord (43) d'alimentation du raccord (75) de mise à l'atmosphère si le tiroir (23, 53, 97) se trouve dans la deuxième position.

7. Vanne à plusieurs voies suivant la revendication 6,
**caractérisée en ce que**
la partie de sortie, formée dans le tiroir (23, 53, 97), communique avec une chambre de mise à l'atmosphère si le tiroir (23, 53, 97) se trouve dans la première position,
dans laquelle la chambre de mise à l'atmosphère est rendue étanche à une extrémité opposée à la région de sortie, au moyen d'au moins un quatrième élément (85) souple d'étanchéité.

8. Vanne à plusieurs voies suivant l'une des revendications précédentes,
**caractérisée en ce que**
le au moins un deuxième raccord (27, 31, 43, 47) et/ou le premier raccord (41, 33) ont au moins une ouverture (25, 29) ovale.

9. Vanne à plusieurs voies suivant la revendication 8,
**caractérisée en ce que**
au moins une ouverture (25, 29) a une section transversale elliptique.

10. Vanne à plusieurs voies suivant l'une des revendications précédentes,
**caractérisée en ce que**
la vanne (20, 50) à plusieurs voies est une vanne de stationnement et de manœuvre d'un véhicule, notamment d'un camion ou d'une remorque.

11. Procédé de réglage d'une pression de fonctionnement d'une installation pneumatique, dans lequel on règle la pression de fonctionnement de l'installation pneumatique au moyen d'une vanne (20, 50) à plusieurs voies, qui comprend une chambre (21, 61) sous pression et un tiroir (23, 53, 97), la chambre (21, 61) sous pression ayant un espace sous pression, un premier raccord (33, 41) et au moins un deuxième raccord (27, 31, 43, 47),
et dans lequel on déplace le tiroir (23, 53, 97) dans l'espace sous pression de la chambre (21, 61) sous pression entre une première position, dans laquelle l'installation pneumatique communique avec une vanne (45) de mise à l'atmosphère, et une deuxième position, dans laquelle l'installation pneumatique communique avec un conduit d'alimentation pour alimenter l'installation pneumatique en air comprimé,
et dans lequel le tiroir (23, 53, 97) comprend un premier élément (73) souple d'étanchéité et au moins un deuxième élément (55) souple d'étanchéité et dans lequel le premier élément (73) d'étanchéité est disposé dans une partie du tiroir (23, 53, 97), qui se déplace dans une première partie (63) de passage prévue dans l'espace sous pression, si l'on met le tiroir (23, 53, 97) dans la première position,
et dans lequel le au moins deuxième élément (55) d'étanchéité est disposé dans une partie du tiroir (23, 53, 97), qui se déplace dans au moins une deuxième partie (65) de passage prévue dans l'espace sous pression, si l'on met le tiroir (23, 53, 97) dans la au moins une deuxième position et dans lequel la première partie (63) de passage et la au moins une deuxième partie (65) de passage ont chacune une pluralité d'éléments (67, 93) de passage à distance les uns des autres,
**caractérisé en ce que**
la vanne (20, 50) à plusieurs voies comprend au moins un dispositif d'arrêt pour défaire une liaison du tiroir (23, 53, 97) avec la chambre (21, 61) sous pression, le tiroir (23, 52, 97) pouvant être arrêté dans la deuxième position par le dispositif d'arrêt.

12. Procédé suivant la revendication 11,
**caractérisé en ce que**
on réduit la section transversale du premier élément (73) souple d'étanchéité, par rapport à une section transversale dans la au moins une deuxième position du tiroir (23, 53, 97) si on met le premier élément (73) souple d'étanchéité dans la première position du tiroir (23, 53, 97) dans la première partie (63) de passage, grâce à quoi on envoie de l'air comprimé de l'installation pneumatique à la vanne (45) de mise en atmosphère par un trou (81) du tiroir (23, 53, 97) et dans lequel on réduit la section transversale d'au moins un deuxième élément (55) souple d'étanchéité, par rapport à une section transversale dans la première position du tiroir (23, 53, 97), si on met le au moins un deuxième élément (55) souple d'étanchéité dans la au moins une deuxième position du tiroir (23, 53, 97) dans la au moins une deuxième partie (65) de passage, grâce à quoi on envoie de l'air comprimé du conduit d'alimentation à l'installation pneumatique par un conduit d'écoulement, formé entre le au moins deuxième élément (55) d'étanchéité et la chambre (21, 61) sous pression et par la au moins une deuxième partie (65) de passage.

13. Procédé suivant la revendication 11 ou 12,
**caractérisé en ce que**
le au moins un deuxième raccord (27, 31, 43, 47) et/ou le premier raccord (41, 33) a au moins une ouverture (25, 29) ovale et de l'air envoyé par la au moins une ouverture (25, 29) ovale comprime, au moins par endroits, le au moins un deuxième élément (55) souple d'étanchéité et rend possible un déplacement ménageant les matériaux du au moins un deuxième élément (55) souple d'étanchéité sur des éléments (67, 93) de passage prévus dans la au moins une deuxième partie (65) de passage et/ou comprime, au moins par endroits, le premier élément d'étanchéité et rend possible un déplacement ménageant les matériaux du premier élément (73) d'étanchéité sur des éléments (67, 93) de passage prévus dans la première partie (63) de passage.
